# EUROPEAN PATENT APPLICATION

(11) **EP 4 840 314 A1**
(43) Date of publication of application: **18.11.2026**
(21) Application number: 26178734.5
(22) Date of filing: 14.05.2026
(51) Int. Cl.: A21C 3/02

(54) **DOUGH SHEET MACHINE FOR ALIMENTARY DOUGH**

(30) Priority: 15.05.2025 IT 202500011028
(71) Applicant: Novarese, Diego, 37142 Verona (VR) (IT)
(72) Inventor: Novarese, Diego, 37142 Verona (VR) (IT)
(74) Representative: Münchow, Vera Ute Barbara

(57) **Abstract**

The invention relates to a dough sheet machine (110) for alimentary dough (P) comprising a rolling unit provided with a pair of rolling rollers (132) and upstream of this rolling unit also a volumetric pump (129) provided with at least one pair of parallel profiled rollers (127) rotatable during use in opposite directions and in a top view towards opposite walls of a housing (114) in which the volumetric pump is arranged. The rolling rollers (132) and the profiled rollers (129) form a channel space (136) between them. A pressure sensor (142) may be provided in the channel space. A related process and plant for producing pasta are also described.

## Description

### TECHNICAL FIELD

The invention relates to a dough sheet machine for processing alimentary dough and a related process for producing sheet-shaped dough.

### BACKGROUND OF THE INVENTION

In the production of sheet-shaped pasta for food products, in particular for pasta-making products, the artisanal and industrial processes provide for a step of kneading the flour, a step of processing the dough and a step of sheet-forming the dough processed to a desired thickness. The dough sheet machine is used to produce a continuous web of dough starting from a shapeless dough, usually consisting of virgin dough and scrap dough.

Dough sheet machines working for rolling and dough sheet machines working for extrusion are known. The first case provides for a kneading unit followed by a unit of calibrating rollers or rolling rollers to obtain the desired thickness of the dough.

The kneading unit comprises one or more pairs of side-by-side rollers, the so-called kneading rollers, with a shaped surface or pronounced grooves and the axes of the kneading rollers on the same plane. The dough passes through the kneading rollers that rotate in opposite directions and is processed by compressing and uniforming it. Subsequently, the dough, already in the form of a thick sheet, is pushed by the kneading rollers towards at least one pair of rolling rollers to compact and impose the desired thickness. The pressures to which the dough is subjected are low, a few bars at most, which is not ideal from the point of view of the compactness and elasticity achievable.

In the extrusion, on the other hand, the dough is pushed, by means of a screw, towards a die. The die has shaped passageways through which the dough passes. In order to be extruded, the dough is pressed at high pressure values of the order of tens of bars, but this entails a high heating of the dough which has negative effects on it.

### DISCLOSURE OF THE INVENTION

The object of the present invention is to overcome the aforementioned drawbacks and to propose a dough sheet machine for alimentary dough and a related process for the production of sheet-shaped pasta that produce pasta with greater compactness and elasticity compared to the dough sheet machines of the state of the art that work according to the principle of rolling and while avoiding overheating of the pasta that occurs in the type of machines according to the state of the art that apply the principle of extrusion.

In a first aspect of the invention, the object is achieved by a dough sheet machine comprising:
(a) a housing having at least two opposite walls;
(b) a rolling unit comprising at least one pair of parallel rolling rollers rotatable during use in opposite directions and in a top view rotatable towards each other, wherein said rolling rollers are located at least partially between said opposite walls;
   wherein upstream of said rolling unit the dough sheet machine further comprises between said opposite walls
(c) a volumetric pump comprising at least one pair of parallel profiled rollers rotatable during use in opposite directions and in a top view towards said opposite walls of the housing wherein the profiled rollers are arranged to mesh with each other and the rolling rollers and the profiled rollers form a channel space between them.

Advantageously, the housing includes one or more openings for the dough to be processed to enter and exit.

The top view in other words is understood as a view in the main direction of processing of the dough or pasta.

The dough sheet machine according to the invention works with a different principle than the dough sheet machines of the state of the art. The kneading rollers are replaced by profiled rollers, in particular by lobe rollers, which act as a volumetric pump. As can be seen from the comparison of the two systems, the kneading rollers rotate in the same direction as the rolling rollers, while the rollers of the volumetric pump have, in order to operate correctly, a reverse direction of rotation with respect to the rolling rollers. The profiled rollers are capable of generating much higher pressures than the kneading rollers of the state of the art. The latter, due to their conformation, cannot exert high pressures; furthermore, in order to increase the pressure exerted, it is necessary to increase the rotation speed with respect to the speed of the rolling rollers. This results in heating of the dough which is detrimental. On the contrary, the profiled rollers of the volumetric pump, due to their conformation, exert a high pressure without heating the dough.

In the invention, the dough is discharged into a pressurized volume, and precisely into the above channel space. Advantageously, the only point of "escape" for the dough is between the rolling rollers, guaranteed by the choice of the rotation directions of the rollers and the meshing between the profiled rollers.

The invention combines the principle of rolling with a characteristic usually reserved for extrusion processing in a dough sheet machine: the high pressure exerted on the dough. This processing at high pressure, but not too high, obtainable with the volumetric pump, gives the dough greater compactness and elasticity. Furthermore, unlike extrusion, the dough undergoes less heating. These advantages are obtained through the innovative concept of combining a volumetric pump with a rolling unit or by replacing the kneading unit with a volumetric pump. The volumetric pumps can have various profiles, but the principle of operation is always the same. One possible profile is a lobe profile or an "involute" profile.

An involute profile is a geometric profile defined by the involute curve of a circle, that is, the path traced by a point on a straight line as it is unwound without slipping along a base circle. Equivalently, it is the curve obtained as the envelope of the successive positions of the straight line tangent to the base circle during unwinding. This profile is characterized, among other things, by a constant pressure angle during contact with a complementary profile.

For those with general knowledge in the field (such as mechanical design and gearing), the term "involute profile" has a clear and well-established technical meaning. It immediately brings to mind the family of curves generated from a base circle and used to ensure kinematically correct contact conditions, in particular the transmission of motion with a constant ratio and without relative slipping along the line of action. Consequently, the expert understands that an "involute profile" implies the typical properties of such curves (such as the constancy of the pressure angle and compatibility with complementary involute profiles), without the need for further specifications, unless additional geometric limitations are to be imposed (e.g., radius of the base circle, module, or length of the involute segment), which, in any case, can be easily optimized for the implementation of the invention by a person skilled in the art.

In a preferred embodiment of the invention, the closed character of the channel space with the only outlet between the rolling rollers is further ensured by the fact that the axes of the four rollers form in cross-section ideally the corners of a rectangle and that the distance between the walls of the housing and the surface of the rollers at the maximum diameter of the rollers and along at least one segment of the rollers is less than 2 mm, in particular ≤ 1,5 mm, and by the fact that the difference between the centre distance between a profiled roller and the corresponding underlying rolling roller and the sum of their maximum radii is less than 2 mm, in particular ≤ 1,5 mm so that the only exit point for the dough during use of the dough sheet machine is the passage between the rolling rollers, which are in rotation. The rectangle preferably approximates a square in which the lengths of pairs of opposite sides are similar to each other.

Preferably, the dough sheet machine according to the invention further comprises two drive units, in particular two gear motors, of which one drive unit drives the volumetric pump, and the other drive unit drives the rolling rollers. The presence of two independent drive units allows the separate adjustment of the speeds of the profiled rollers of the volumetric pump and of the rolling rollers according to the production needs of the dough sheet machine.

A particularly advantageous variant of the invention provides for a pressure sensor in the channel space. The person skilled in the art easily identifies a suitable pressure sensor with their general knowledge. With the pressure sensor it is possible to monitor the pressure of the dough and increase or decrease it with the increase or decrease in the speed of the profiled rollers. Increasing the pressure serves to better compact the dough within the desired limits, while reducing the pressure may be necessary to avoid overheating the dough. In addition, the controlled adjustment of the volumetric pump speed allows the dough pressure to be kept constant by varying the speed of the profiled rollers.

To manage this adjustment system, the dough sheet machine according to the invention further comprises, advantageously, a control unit configured to regulate via the control of the respective drive unit the speed of the profiled rollers according to the pressure values received from the pressure sensor.

A second aspect of the invention relates to a plant for producing pasta, in particular long pasta, maltagliati or filled pasta, comprising:
(i) a dough sheet machine according to the invention; and downstream thereof
(ii) a pasta producing machine, in particular long pasta, maltagliati or filled pasta suitable for receiving the dough exiting in the form of a dough sheet from the dough sheet machine wherein there is preferably a control unit which is configured to adjust the speed of the rolling rollers according to the production speed of the pasta producing machine, in particular long pasta, maltagliati or filled pasta.

The machine for producing pasta, in particular long pasta, maltagliati or filled pasta, is suitable for cutting the dough sheet, and in the case of filled pasta also for forming a wrapping from the cut portion and filling the wrapping with a filling. The state of the art knows a wide range of pasta production machines, in particular long pasta, maltagliati or filled pasta, for example raviolo-making machines. The dough sheet machine according to the invention can practically be combined with any pasta producing machine, in particular long, maltagliati or filled pasta suitable for receiving and processing a dough sheet.

Preferably, the control unit that regulates the speed of the raviolo-making machine corresponds to the control unit that also controls the above mentioned drive units and the pressure sensor. Usually the speed of the pasta producing machine is independent of the speed of the dough sheet machine, but it determines the speed of the dough sheet machine. Advantageously, the dough sheet machine and the raviolo-making machine are connected by a sheet-shaped dough transport system.

The term raviolo used in this text is intended as a generic term for a wrapping of alimentary pasta of any form filled with an ingredient of various kinds.

A further aspect of the invention concerns a process for the production of sheet-shaped alimentary dough comprising the following steps:
(I) preparation of an alimentary dough;
(II) compacting of the dough by means of a volumetric pump in a channel space created between the volumetric pump and a subsequent rolling unit comprising at least one pair of parallel rolling rollers, in particular in a dough sheet machine according to the invention;
(III) rolling the compacted dough between said at least one pair of rolling rollers.

Preferably, during step (II) the pressure inside the dough is measured and the speed of the volumetric pump is adjusted according to the measured pressure for the reasons illustrated above with reference to the dough sheet machine.

In a variant of the invention, after step (III) there follows a step (IV) comprising cutting the rolled dough, for example to produce long pasta such as tagliatelle, maltagliati or the like, and optionally a further step (V) of forming a wrapping of the cut dough and filling the wrapping to produce filled pasta, such as a raviolo.

The features described for one aspect of the invention can be transferred *mutatis mutandis* to the other aspects of the invention.

The resolution of technical problems and the industrial application are obvious from the moment in which it was possible to propose a dough sheet machine and a related process capable of overcoming the disadvantages of the state of the art and producing a more compact and elastic sheet-shaped dough, in particular with respect to the types that apply the rolling technique.

Said objects and advantages will be better highlighted during the description of preferred embodiment examples of the invention given, by way of example and not of limitation

Variant embodiments of the invention are the object of the dependent claims. The description of preferred embodiment examples of the dough sheet machine and of the related process according to the invention is given, by way of example and not of limitation, with reference to the attached drawings. In particular, it should be noted that the dimensions, shape, materials, and number of components may vary without departing from the inventive concept and without going beyond the scope of protection defined by the claims. In particular, individual components may be replaced by equivalent components.

### Brief description of the drawings

- Fig. 1: illustrates in a cross-sectional view a dough sheet machine according to the state of the art.
- Fig. 2: illustrates a cross-sectional view of an embodiment example of the dough sheet machine according to the invention.
- Fig. 3: illustrates in a detail of Fig. 1 the distribution of the dough between the various rollers of the dough sheet machine according to the state of the art.
- Fig. 4: illustrates in a detail of figure 2 the distribution of the dough between the various rollers of the dough sheet machine according to the invention.
- Fig. 5: illustrates in a side sectional perspective view the dough sheet machine according to Figure 2.

### Description of the exemplary embodiments

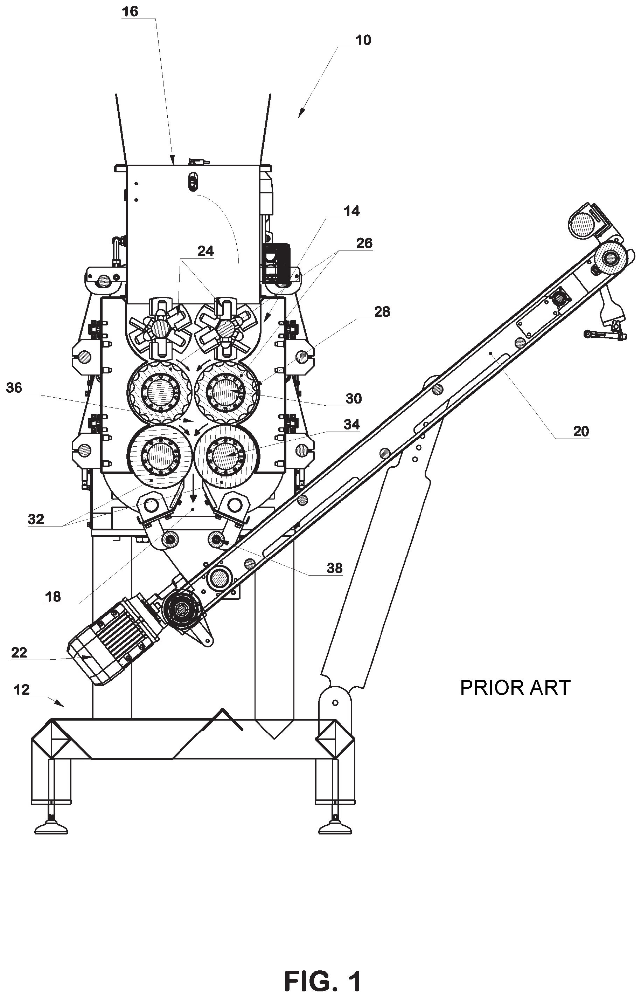

Fig. 1 illustrates in a cross-sectional view a dough sheet machine **10** according to the state of the art. On a support **12** there is a housing **14** with an inlet **16** and an outlet **18** for the rolled dough that is collected on a conveyor belt **20** moved by a dedicated motor **22.** There is a succession of rollers: a pair of finned rollers **24** for a first processing and distribution of the dough, a pair of kneading rollers **26** and a pair of rolling rollers **32.** The axes **30** of the two kneading rollers **26** are parallel. The direction of rotation of the two kneading rollers **26** is opposite as indicated by the respective arrows and is directed towards the inside of the housing **14.** The space between the kneading rollers **26** and the inner wall of the housing **14** that imitates with a corresponding cavity the shape of the kneading rollers **26** is minimal and given the not very pronounced depth of the grooves **28** and the direction of rotation of the kneading rollers **26,** the dough introduced into the housing **14** moves first between the two kneading rollers **26** and subsequently between a pair of rolling rollers **32** with an essentially smooth surface that rotate in the opposite direction, as indicated by the respective arrows, but in a top view always one roller towards the other like the kneading rollers **26.** The axes **34** of the rolling rollers **32** are parallel and also parallel to the axes **30** of the two kneading rollers **26.** The gap created between the two kneading rollers **26** and the thinner gap created between the two rolling rollers **32** are aligned. This arrangement and the direction of rotation of the rolling rollers **32** cause the dough exiting the kneading rollers **26** to pass into the gap between the two rolling rollers **32.** In the space **36** (in almost rhomboid section) between the two kneading rollers **26** and the two rolling rollers **32,** a high pressure is not created to obtain a compacted and elastic dough. Guides **38** help to arrange the sheet-shaped dough exiting the outlet **18** on the conveyor belt **20.**

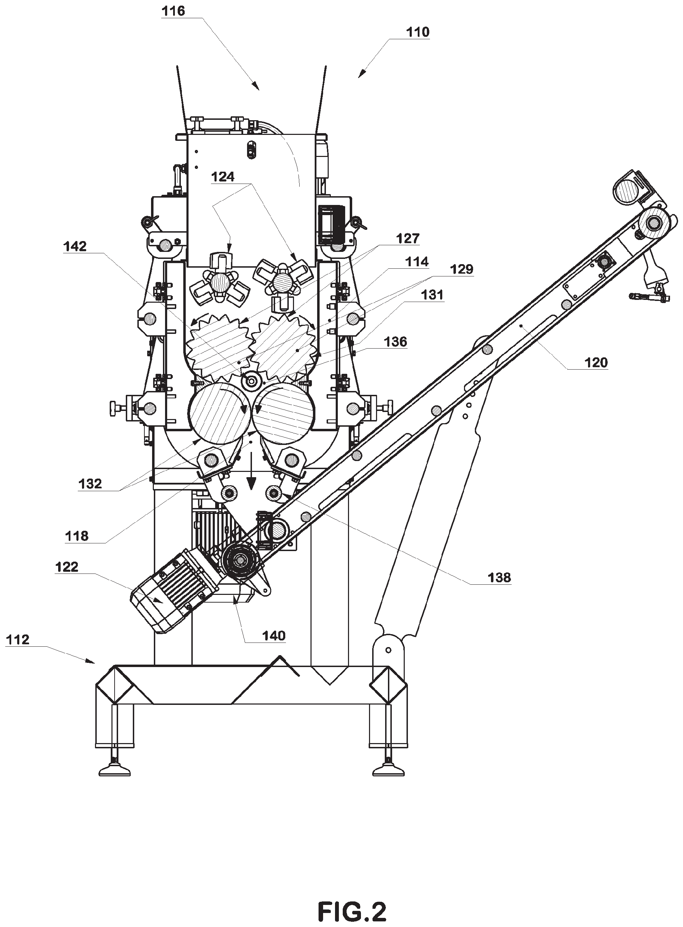

Fig. 2 illustrates a cross-sectional view of an embodiment example of the dough sheet machine **110** according to the invention. On a support **112** a housing **114** is fixed with an inlet **116** and an outlet **118** for the rolled dough that is collected on a conveyor belt **120** moved by a dedicated motor **122.** Also in this case, a succession of rollers is noted: a pair of finned rollers **124** for a first processing and distribution of the dough, a pair of profiled rollers **127** forming a volumetric pump **129** and a pair of rolling rollers **132.** In place of the kneading rollers **26,** in the invention two profiled rollers **127** are provided forming a volumetric pump **129;** the profile is represented by lobes. The direction of rotation of the two rollers **127** of the volumetric pump **129** is opposite as indicated by the respective arrows, but unlike the state of the art directed towards the walls of the housing **114.** The space between the rollers **127** of the volumetric pump **129** and the inner wall of the housing **114** that mimics with a corresponding cavity the shape of the rollers **127** of the volumetric pump **129** is minimal, but given the very pronounced depth of the cavities **131** formed between the lobes and the direction of rotation of the rollers **127** of the volumetric pump **129,** the dough introduced into the housing **114** moves in the cavities **131** between the lobes along the inner wall of the housing **114.** The dough will accumulate in the space **136** between the profiled rollers **127** and the subsequent rolling rollers **132** with an essentially smooth surface downstream that rotate in opposite directions and in a top view one roller towards the other, since the only "escape" route for the dough set by the distances between the various rollers and their rotation directions is the gap between the rolling rollers **132.** The accumulation of the dough in the space **136** causes the pressure exerted on it to increase, compacting it and consequently increasing its elasticity. The arrangement of the various rollers **127, 132** and their direction of rotation causes the dough accumulated in the channel space **136** of the volumetric pump **129** to pass into the gap between the two rolling rollers **132.** Guides **138** help arrange the sheet-shaped dough on the conveyor belt **120.** Two motors respectively drive the volumetric pump and the two rolling rollers **132.** Only the motor **140** driving the rolling rollers **132** is visible.

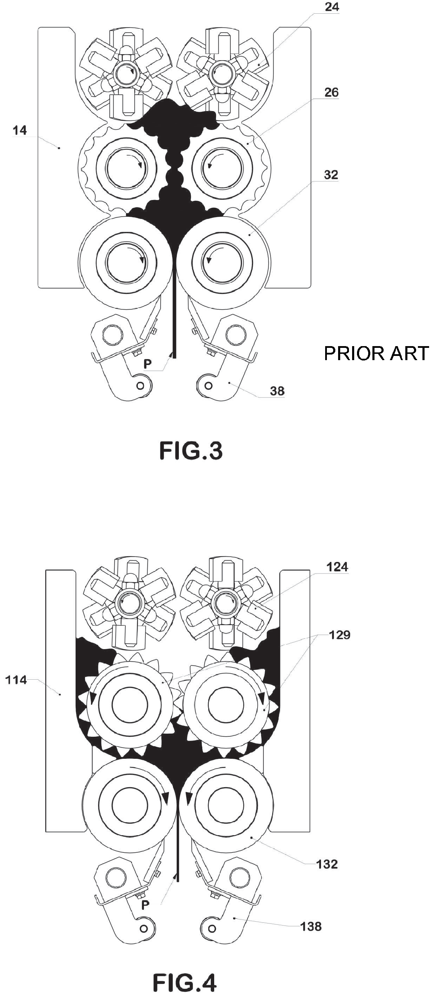

Fig. 3 shows in a detail of Fig. 1 the distribution of the dough **P** between the various rollers **26, 32** of the dough sheet machine **10** according to the state of the art; while Fig. 4 shows in a detail of Fig. 2 the distribution of the dough **P** between the various rollers **127, 132** of the dough sheet machine **110** according to the invention. According to the state of the art, the dough **P** is distributed by the finned rollers **24** on the kneading rollers **26** and passes through the slot between them (the kneading rollers **26** do not "mesh", the centre distance is greater than the maximum diameter of the kneading rollers **26**) at a reduced pressure and reaches the slot between the two rolling rollers **32** to be transformed into a sheet-shaped dough **P.** The dough **P** in the space between the rollers **26, 32** is not under pressure. The grooves **28** of the kneading rollers **26** serve to push, but do not generate significant pressure. Hypothetically, the kneading rollers **26** could turn without the dough **P** advancing, in the sense that it can be "regurgitated". In the configuration with the profiled or lobed rollers **127** of the invention, on the other hand, the profiles "mesh" with each other and act as a real volumetric pump. If the dough **P** could not come out from below, theoretically the profiled rollers **127** would stop at some point because the dough has no outlets; it would be like filling a finite volume with a liquid substance. The space between the rollers **127, 132** is "closed" and allows greater compaction of the dough **P.** Regarding the profile of the rollers **127** of the volumetric pump **129,** the most efficient profile would be an "involute" profile. The "involute" profile is comparable to the gear wheels used in the mechanisms. The main advantage of this profile is of a manufacturing nature, in the sense that the production technology of the gear wheels could be exploited. Furthermore, this profile has the advantage that the two paired rollers are identical. Other paired profiles are also possible, which, however, may not have the same rollers. In addition to the direction of rotation of the rollers **129** that pushes the dough **P** along the inner wall of the housing **114,** the other peculiarity of the invention is the fact that the profiled rollers **127** "mesh" with each other. In other words, the centre distance between the profiled rollers **127** is smaller than the maximum diameter of the profiled rollers **127.**

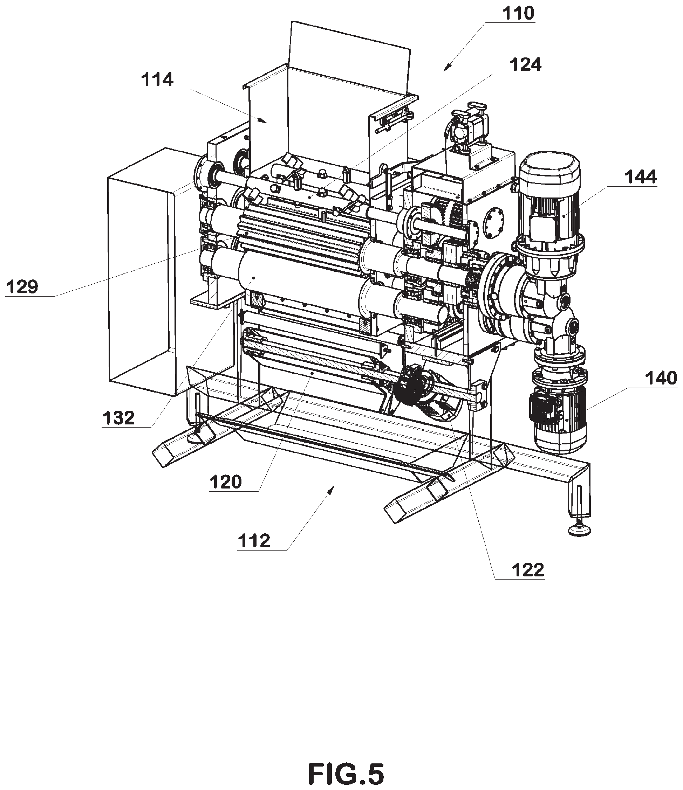

Fig. 5 illustrates in a side sectional perspective view the dough sheet machine **110** according to Figure 2. Inside the housing **114,** from top to bottom, the following can be noted: finned rollers **124,** a volumetric pump roller **129** and a rolling roller **132.** The gear motor **144** drives the volumetric pump, while the gear motor **140** drives the rolling rollers **132.** The transmission mechanisms between motors and rollers are well-known in the art and are part of the general knowledge of the person skilled in the art. It is therefore not necessary to detail them. Downstream of the succession of rollers, the conveyor belt **120** is noted, which receives and transports, driven by the motor **122,** the sheet-shaped dough coming out of the rolling rollers **132.**

In a non-limiting exemplary embodiment of the dough sheet machine **110** according to the invention, the centre distance between the finned rollers **124** corresponds to the centre distance between the profiled rollers **127** of the volumetric pump and the centre distance of the rolling rollers **132** and can, for example, have a value of 160 mm. The centre distance between a finned roller **124** and the underlying profiled roller **127** in this example is 168 mm and the centre distance between a profiled roller **129** and the underlying rolling roller **132** is 166.50 mm.

The axes of the four rollers **129** and **132** form in section the corners of a rectangle whose sides ideally have similar lengths between them, almost resembling a square. The walls of the housing **114** conform to the surface contour of the rollers at least in the lower part of the profiled rollers **127** and in the upper part of the rolling rollers **132.** The gaps between the profiled rollers **127** and the rolling rollers **132** at the maximum diameters of the rollers are minimal, preferably < 2 mm, even more preferably ≤ 1.5 mm to ensure a space **136** which, together with the rotation directions of the individual rollers, defines the gap between the rolling rollers **132** as the only exit point for the dough, thus allowing the pressure in this gap **136** to increase.

The dimensions of the profiled rollers **127** and their profile are linked to the profile of the lobes and the kinematic chain of the gear wheels of the mechanism that drives the entire assembly. They are not arbitrary dimensions, but linked to the module of the gear wheels of the kinematic chain. The groove of the profiled rollers **129** is also, in an exemplary form, practically a toothing with modulus M = 10 mm with Z = 16 teeth, in fact, the centre distance is the product of the module by the number of teeth (160 mm).

Figure 2 shows in the space **136** a pressure sensor **142** which, together with a control unit (not shown), enables regulation of the speed of the profiled rollers **127** according to the determined pressure values. With regard to the sensors, preferably only one pressure sensor is provided. This sensor is used, as mentioned, to modulate the pressure that is exerted on the dough **P** by adjusting the speed of the gear motor **144** that drives the volumetric pump. The speed of the rolling rollers **132** could instead be determined by the speed of a downstream raviolo-making machine (not shown) which receives the dough **P** for the formation of a raviolo.

## Claims

1. A dough sheet machine (110) for alimentary dough (P) comprising:
(a) a housing (114) having at least two opposing walls;
(b) a rolling unit comprising at least one pair of parallel rolling rollers (132) rotatable during use in opposite directions and in a top view rotatable towards each other, wherein said rolling rollers (132) are located at least partially between said opposite walls;
**characterized in that,** upstream of said rolling unit, said dough sheet machine (110) further comprises between said opposite walls
(c) a volumetric pump (129) comprising at least one pair of parallel profiled rollers (127) rotatable during use in opposite directions and in a top view towards said opposite walls of the housing (114) wherein the profiled rollers (127) are arranged to mesh with each other and the rolling rollers (132) and the profiled rollers (129) form a channel space (136) between them; and
**in that** a pressure sensor (142) is provided in said channel space (136).

2. The dough sheet machine (110) according to claim 1, **characterized in that** the axes of the four rollers (127; 132) form in cross-section ideally the corners of a rectangle, and that the distance between the walls of the housing (114) and the surface of the rollers (127, 132) at the maximum diameter of the rollers (127, 130) and along at least one segment of the rollers is less than 2 mm, in particular ≤ 1.5 mm, **and in that** the difference between the centre distance between a profiled roller (127) and the corresponding underlying rolling roller (132) and the sum of their maximum radii is less than 2 mm, in particular ≤ 1,5 mm so that the only exit point for the dough during use of the dough sheet machine (110) is the passage between the rolling rollers (132) in rotation.

3. The dough sheet machine (110) according to claim 1 or 2, **characterized in that** the profile of the profiled rollers (127) is an involute profile.

4. The dough sheet machine (110) according to any one of the preceding claims, **characterized by** further comprising two drive units (140, 144), in particular two gear motors, of which one drive unit (144) drives the volumetric pump (129), and the other drive unit (140) drives the rolling rollers (132).

5. The dough sheet machine (110) according to anyone of the preceding claims, **characterized by** further comprising a control unit configured to regulate via the control of the respective drive unit (144) the speed of the profiled rollers (127) according to the pressure values received from the pressure sensor (142).

6. A plant for producing pasta, in particular long pasta, maltagliati or filled pasta, comprising:
(i) a dough sheet machine (110) according to any one of the preceding claims; and downstream thereof
(ii) a pasta producing machine, in particular long pasta, maltagliati or filled pasta suitable for receiving the dough (P) exiting in the form of a dough sheet from the dough sheet machine (110) wherein there is preferably a control unit which is configured to adjust the speed of the rolling rollers (132) according to the production speed of the pasta producing machine, in particular long pasta, maltagliati or filled pasta.

7. A process for the production of sheet-shaped alimentary dough comprising the following steps:
(I) preparation of an alimentary dough (P);
(II) compacting of the dough by means of a volumetric pump (129) in a channel space (136) created between the volumetric pump (129) and a subsequent rolling unit comprising at least one pair of parallel rolling rollers (132), in particular in a dough sheet machine (110) according to any one of the claims 1 to 5;
(III) rolling the compacted dough between said at least one pair of rolling rollers (132), wherein during step (II) the pressure inside the dough is measured and the speed of the volumetric pump (129) is adjusted according to the measured pressure.

8. The process for producing alimentary dough according to claim 7, **characterized in that** after step (III) there follows a step (IV) comprising cutting the rolled dough, for example to produce long pasta such as tagliatelle, maltagliati or the like, and optionally a further step (V) of forming a wrapping of the cut dough and filling the wrapping to produce filled pasta, such as a raviolo.

9. The process according to claim 7 or 8 **characterized by** further comprising a further step (V) of forming a wrapping of the cut dough and filling the wrapping to produce filled pasta, such as a ravioli.
